# EUROPÄISCHE PATENTANMELDUNG

(11) **EP 4 461 706 A1**
(43) Veröffentlichungstag der Anmeldung: **13.11.2024**
(21) Anmeldenummer: 23405003.7
(22) Anmeldetag: 11.05.2023
(51) Int. Cl.: C02F 1/68, C02F 1/48, C02F 1/66

(54) **WASSERBEHANDLUNGSGERÄT**

(71) Anmelder: TECHAQUA AG, 8865 Bilten (CH)
(72) Erfinder: Frei, Rolf, 8730 Uznach (CH); Herrmann, Christoph, 8342 Wernetshausen (CH)
(74) Vertreter: Keogh, Craig Brendan

(57) **Zusammenfassung**

Das Wasserbehandlungsgerät weist ein Kopfteil (1) mit einem Zulauf (2) und einem Ablauf (3) auf, an dessen Unterseite ein Behälter (4) anschliesst, in dem eine von einem Aussenraum (22) umgebene Patrone (9) angeordnet ist, mit einem Gitterkorb (19), der in einem durch einen Gittereinsatz (23) abgeteilten Reaktionsvolumen (25) ein Reaktionsmaterial, z.B. Kugeln aus Magnesium, enthält. Der Zulauf (2) ist mit dem Aussenraum (22) verbunden, während die Kammer (25) über einen Gitterdeckel (24) mit dem Ablauf (3) verbunden ist. Der Gitterkorb (19) einerseits und der Gittereinsatz (23) und der Gitterdeckel (24) andererseits bestehen jeweils aus einem Gittermaterial mit Öffnungen, deren Duchmesser zwischen 200 und 300µm bzw. zwischen 50 und 60pm liegt. Dadurch werden beim Durchströmen der Patrone (9) neben einer Anhebung des pH-Werts des Wassers durch Reaktion mit dem Magnesium zugleich Partikel, z.B. aus Kalk oder Rost, ausgefiltert. Ein Magnet (8) am Grund des Behälters (4) fängt ferromagnetische Partikel ab, während am Gitterkorb (19) abgeschiedenes gelöstes Gas einem Entlüfter (26) zugeführt wird.

## Beschreibung

### Technisches Gebiet

Die Erfindung betrifft ein Wasserbehandlungsgerät, wie sie in geschlossenen Wasserkreisen, z.B. in Heizungen, zur Aufrechterhaltung einer ausreichenden Wasserqualität, z.B. eines pH-Werts, bei dem keine nennenswerte Korrosion der Leitungen auftritt, eingesetzt werden.

### Stand der Technik

Gattungsgemässe Wasserbehandlungsgeräte sind seit längerem bekannt. Bei einem von der Anmelderin hergestellten und unter dem Namen SorbOx^{®} vertriebenen Gerät sind sowohl der Zulauf wie der Ablauf mit dem die Patrone umgebenden Aussenraum verbunden, sodass ein wesentlicher Teil des Wassers nicht durch die Patrone, sondern aussen am Gitterkorb derselben entlang strömt. Dies hält zwar den Strömungswiderstand tief und hat auch keine wesentlichen Auswirkungen auf die Qualität der Wasserbehandlung, doch können störende Partikel im Wasserkreis verbleiben, wenn sie nicht durch zusätzliche Filtereinrichtungen abgefangen werden.

### Darstellung der Erfindung

Der Erfindung liegt die Aufgabe zu Grunde, die Wasserbehandlung insofern zu verbessern, als feste Partikel, z.B. Kalk- oder Rostpartikel, die sich in den Leitungen gebildet haben und von der Strömung mitgerissen wurden, durch das Wasserbehandlungsgerät ausgefiltert werden. Diese Aufgabe wird durch die Erfindung, wie sie im Anspruch 1 gekennzeichnet ist, gelöst.

### Kurze Beschreibung der Zeichnungen

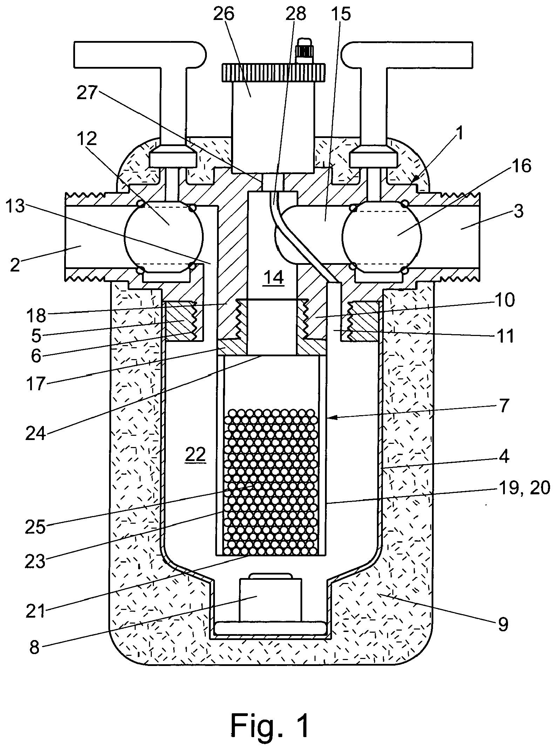

Im folgenden wird die Erfindung anhand einer Figur, welche lediglich ein Ausführungsbeispiel darstellt, näher erläutert. Dabei zeigt
- Fig. 1: einen axialen Längsschnitt durch ein erfindungsgemässes Wasserbehandlungsgerät.

### Wege zur Ausführung der Erfindung

Das Wasserbehandlungsgerät weist ein Kopfteil 1 aus Metall, vorzugsweise Messing, auf, mit einem Zulauf 2 und einem Ablauf 3, die jeweils mit Aussengewinden versehen sind, mittels derer sie an Rohre eines Rohrsystems anschliessbar sind. Das Rohrsystem kann z.B. einen geschlossenen Wasserkreis in einer Heizungsanlage bilden.

An der Unterseite des Kopfteils 1 ist ein rotationssysmmetrischer Behälter 4 aus Metall angeordnet, mit einem oberen zylindrischen Teil, der in einem oberen Randbereich einen innenliegenden Befestigungsring 5 aus Kunststoff trägt, welcher mit einem umlaufenden Kragen 6 des Kopfteils 1 verschraubt ist und eine Patrone 7 mit Abstand umgibt, sowie einem engeren unteren Teil mit einem ebenen Boden, auf dem ein Magnet 8 angebracht ist. Das Kopfteil 1 und der Behälter 4 sind in einem Gehäuse 9 aus einem wärmedämmenden porösen Kunststoff angeordnet.

Das Kopfteil 1 weist einen zentralen, nach unten ragenden offenen Stutzen 10 auf, den der Kragen 6 mit Abstand umgibt, sodass zwischen dessen Innenseite und dem Stutzen 10 eine nach unten offene umlaufende Nut 11 liegt. Der Zulauf 2 ist über einen Kugelhahn 12 und einen Durchlass 13 mit einer Öffnung am Grund der Nut 11 verbunden. Der Stutzen 10 führt in eine zentrale zylindrische Kammer 14 des Kopfteils 1, die über eine Verbindung 15 und einen weiteren Kugelhahn 16 mit dem Ablauf 3 verbunden ist.

Die Patrone 9 weist einen ringförmigen Deckel 17 aus Kunststoff auf, der einen zentralen nach oben ragenden zylindrischen Anschlussstutzen 18 trägt, mit einem Aussengewinde, das mit einem Innengewinde des Stutzens 10 eingreift. Ein Gitterkorb 19 der Patrone 7 besteht aus einem zylindermantelförmigen Umfangsteil 20, das mit der Aussenseite des Deckels 17 verbunden ist und, nach oben etwas über denselben hinausgehend, in die Nut 11 hineinragt, wo er an der Aussenseite des Stutzens 10 anliegt, sowie einem ebenen Gitterboden 21 an einem unteren Ende. Der Gitterkorb 19, welcher sich vom Deckel 17 nach unten etwa über die Länge des oberen zylindrischen Teils des Behälters 4 erstreckt, teilt den vom Behälter 4 umgebenen Hohlraum in einen vom Gitterkorb umgebenen Innenraum und einen den Gitterkorb 19 umgebenden Aussenraum 22, der sich in die Nut 11 hinein fortsetzt. Das Umfangsteil 20 und der Gitterboden 21 bestehen jeweils aus einem Gittermaterial aus rostfreiem Stahl mit einer bestimmten gleichbleibenden Maschenweite, sodass es gleichmässig über seine Fläche verteilte Öffnungen aufweist. Deren Durchmesser beträgt vorzugsweise jeweils zwischen 200µm und 300µm, z.B. ca. 260µm.

Im Inneren des Gitterkorbs 19 ist, koaxial mit dem Umfangsteil 20, ein zylindrischer Gittereinsatz 23 angeordnet, dessen Durchmesser geringfügig kleiner ist der des Umfangsteils 20 und der vom Gitterboden 21 bis zum Deckel 17 reicht. Der Gittereinsatz 23 teilt ein Reaktionsvolumen 25, welches mit einem festen Reaktionsmaterial gefüllt ist, von einem sie umgebenden Teil des Innenraums des Gitterkorbs 19 ab. Eine Ausströmöffnung am oberen Ende des Reaktionsvolumens 25, wo es in die Öffnung des Anschlussstutzens 18 übergeht, ist von einem Gitterdeckel 24 bedeckt. Der Gittereinsatz 23 und der Gitterdeckel 24 bestehen ebenfalls aus einem Gittermaterial aus rostfreiem Stahl, jedoch mit geringerer Maschenweite, derart, dass die über seine Fläche verteilten Öffnungen jeweils einen Durchmesser aufweisen, der zwischen 50µm und 70µm, z.B. ca. 56µm, beträgt.

Das Reaktionsmaterial liegt in einer Vielzahl von losen Stücken vor, deren Durchmesser wesentlich grösser ist als der Durchmesser der Öffnungen des Gittermaterials, aus dem der Gitterkorb 19 besteht. Der Durchmesser der Stücke nimmt, da das Reaktionsmaterial mit dem Wasser reagiert und dadurch allmählich verbraucht wird, mit der Zeit ab, doch bleibt er immer mindestens grösser als der Durchmesser der Öffnungen des Gittermaterials, aus dem der Gittereinsatz 23 und der Gitterdeckel 24 bestehen und in der Regel auch grösser als der Durchmesser der Öffnungen im Gitterboden 21. Die Stücke des Reaktionsmaterials können beispielsweise annähernd kugelförmig sein mit einem anfänglichen Durchmesser von ca. 5mm. Das Reaktionsmaterial kann ein Stoff sein, der geeignet ist, den pH-Wert des durchströmenden Wassers zu erhöhen, derart, dass die Rohrleitungen vom Wasser nicht chemisch angegriffen werden. Sehr gut eignet sich dazu ein Material, das im wesentlichen aus Magnesium besteht.

An der Oberseite des Kopfteils 1 ist ein Entlüfter 26 angeordnet, der durch eine Öffnung 27 am oberen Ende der Kammer 14 mit demselben verbunden ist. Ein dünnes Rohr oder ein dünner Schlauch 28 führt vom Grund der Nut 11 durch eine Bohrung, die die Nut 11 über die Verbindung 15 mit der Kammer 14 verbindet, zur Öffnung 27 und in den Entlüfter 26.

Im Betrieb strömt Wasser vom Zulauf 2 durch den geöffneten Kugelhahn 12 und den Durchlass 13 in den die Patrone 9 umgebenden Aussenraum 22. Der grössere Teil des Wassers fliesst durch diesen nach unten, wo das Wasser durch den Gitterboden 21 in das Reaktionsvolumen 25 eintritt. Ein kleinerer Teil des Wassers fliesst durch das Umfangsteil 20 und den Gittereinsatz 23 ebenfalls in das Reaktionsvolumen 25. Während das Wasser nach oben durch das Reaktionsvolumen 25 strömt, reagiert es mit dem Reaktionsmaterial. Dieses kann etwa, wie schon ausgeführt, in der Form von Kugeln mit einem anfänglichen Durchmesser von ca. 5mm vorliegen, die ganz oder überwiegend aus Magnesium bestehen. Durch Reaktion mit dem Magnesium wird der pH-Wert des Wassers angehoben, sodass es keine störende korrodierende Wirkung auf das Rohrsystem hat. Wegen der Stückelung des Reaktionsmaterials ist seine wirksame Oberfläche sehr gross und die Wasserbehandlung entsprechend wirksam.

Beim Eintritt des Wassers in den Gitterkorb 19 durch den Gitterboden 21 oder das Umfangsteil 20 wird das Wasser gefiltert, d.h. grössere Partikel, z.B. aus Kalk oder Rost, zurückgehalten. Da der grösste Teil des Wassers durch den Gitterboden 21 strömt und damit knapp am Magneten 8 vorbei, werden dort ferromagnetische Partikel abgefangen. Aus dem Reaktionsvolumen 25 strömt das Wasser schliesslich durch die Ausströmöffnung, wo es den Gitterdeckel 24 passiert, und durch den Anschlussstutzen 18 in die Kammer 14 und weiter durch die Verbindung 15 und den Kugelhahn 16 zum Ablauf 3. Sehr kleine Partikel bleiben schon am Gittereinsatz 23 oder am Gitterdeckel 24 hängen und werden so aus dem Wasserkreis entfernt.

Beim Durchfluss des Wassers durch den Aussenraum 22 und die Patrone 7 scheidet sich auch störendes gelöstes Gas in Form von Mikrogasblasen ab, ein wesentlicher Teil davon am Umfangsteil 20 des Gitterkorbs 19. Es wandert dann an dessen Aussenseite nach oben, wo es sich vor allem an der vom Zulauf 2 abgewandten Seite der Nut 11 ansammelt. Von dort wird es durch den Schlauch 28 zum Entlüfter 26 geleitet, wo es periodisch abgezogen werden kann.

Zur Wartung des Wasserbehandlungsgeräts, z.B. Auswechslung der Patrone 9, können der Zulauf 2 und der Ablauf 3 durch den Kugelhahn 12 bzw. den Kugelhahn 16 verschlossen werden.

Das beschriebene Wasserbehandlungsgerät bietet mehrere Funktionen wie das Aussieben von Partikeln, das Abfangen von ferromagnetischen Verunreinigungen, das Anheben des pH-Werts und das Abscheiden von Gasen in einer einzigen kompakten Vorrichtung.

### Bezugszeichenliste

- 1: Kopfteil
- 2: Zulauf
- 3: Ablauf
- 4: Behälter
- 5: Haltering
- 6: Kragen
- 7: Patrone
- 8: Magnet
- 9: Gehäuse
- 10: Stutzen
- 11: Nut
- 12: Kugelhahn
- 13: Durchlass
- 14: Kammer
- 15: Verbindung
- 16: Kugelhahn
- 17: Deckel
- 18: Anschlussstutzen
- 19: Gitterkorb
- 20: Umfangsteil
- 21: Gitterboden
- 22: Aussenraum
- 23: Gittereinsatz
- 24: Gitterdeckel
- 25: Reaktionsvolumen
- 26: Entlüfter
- 27: Öffnung
- 28: Schlauch

## Patentansprüche

1. Wasserbehandlungsgerät für einen Wasserkreis, welches ein Kopfteil (1) umfasst mit einem Zulauf (2) und einem Ablauf (3) sowie einen mit dem Kopfteil (1) verbundenen Behälter (4), der einen mit dem Zulauf (2) und dem Ablauf (3) verbundenen Hohlraum enthält, in dem eine Patrone (9) angeordnet ist mit einem Gitterkorb (19), der einen Innenraum, der ein chemisch auf das Wasser einwirkendes festes Reaktionsmaterial enthält, umgibt und ihn von einem Aussenraum (22), der mit dem Zulauf (2) verbunden ist, trennt, **dadurch gekennzeichnet, dass** der Innenraum mit dem Ablauf (3) verbunden ist.

2. Wasserbehandlungsgerät nach Anspruch 1, **dadurch gekennzeichnet, dass** der Gitterkorb (19) aus einem Gittermaterial besteht mit über seine Fläche verteilten Öffnungen, die jeweils einen Durchmesser aufweisen, der zwischen 200µm und 300µm liegt.

3. Wasserbehandlungsgerät nach Anspruch 1 oder 2, **dadurch gekennzeichnet, dass** der Gitterkorb (19) eine Ausströmöffnung aus dem Innenraum aufweist, die an eine mit dem Auslass (3) verbundene Kammer (14) im Kopfteil (1) anschliesst.

4. Wasserbehandlungsgerät nach Anspruch 3, **dadurch gekennzeichnet, dass** der Gitterkorb (19) zylindrische Form hat, mit einem zylindermantelförmigen Umfangsteil (20) und einem der Ausströmöffnung gegenüberliegenden ebenen Gitterboden (21).

5. Wasserbehandlungsanlage nach Anspruch 3 oder 4, **dadurch gekennzeichnet, dass** die Patrone (9) einen Gitterdeckel (24) umfasst, der die Ausströmöffnung bedeckt.

6. Wasserbehandlungsgerät nach einem der Ansprüche 3 bis 5, **dadurch gekennzeichnet, dass** die Patrone (9) einen Gittereinsatz (23) umfasst, der innerhalb des Gitterkorbs (19) angeordnet ist und ein direkt mit der Ausströmöffnung verbundenes Reaktionsvolumen (25) des Innenraums, in dem das Reaktionsmaterial angeordnet ist, abteilt.

7. Wasserbehandlungsgerät nach Anspruch 6, **dadurch gekennzeichnet, dass** der Gittereinsatz (23) die Form eines Zylindermantels hat und an den Gitterboden (21) anschliessend und zum Umfangsteil (20) konzentrisch im Gitterkorb (19) angeordnet ist.

8. Wasserbehandlungsgerät nach Anspruch 5 und Anspruch 6 oder 7, **dadurch gekennzeichnet, dass** der Gittereinsatz (23) und der Gitterdeckel (24) jeweils aus einem Gittermaterial bestehen mit über seine Fläche verteilten Öffnungen, die jeweils einen Durchmesser aufweisen, der zwischen 50µm und 70µm liegt.

9. Wasserbehandlungsgerät nach einem der Ansprüche 1 bis 8, **dadurch gekennzeichnet, dass** das Reaktionsmaterial in einer Vielzahl von losen Stücken vorliegt, deren Durchmesser jeweils grösser ist als der Durchmesser der Öffnungen des Gitterkorbs (19).

10. Wasserbehandlungsgerät nach Anspruch 9, **dadurch gekennzeichnet, dass** die Stücke im wesentlichen kugelförmig sind.

11. Wasserbehandlungsgerät nach Anspruch 9 oder 10, **dadurch gekennzeichnet, dass** das Reaktionsmaterial geeignet ist, den pH-Wert des Wassers anzuheben.

12. Wasserbehandlungsgerät nach einem der Ansprüche 9 bis 11, **dadurch gekennzeichnet, dass** das Reaktionsmaterial im wesentlichen Magnesium ist.

13. Wasserbehandlungsgerät nach einem der Ansprüche 1 bis 12, **dadurch gekennzeichnet, dass** das Kopfteil (1) einen Entlüfter (26) mit einer verschliessbaren Entlüftungsöffnung umfasst, welcher mit einem Bereich des Aussenraums (22) verbunden ist, der an ein oberes Ende des Gitterkorbs (19) anschliesst.

14. Wasserbehandlungsgerät nach einem der Ansprüche 1 bis 13, **dadurch gekennzeichnet, dass** es einen unterhalb der Patrone (9) im Behälter (4) angeordneten Magneten (8) zum Entfernen ferromagnetischer Partikel aus dem Wasser aufweist.

15. Wasserbehandlungsgerät nach einem der Ansprüche 1 bis 14, **dadurch gekennzeichnet, dass** der Zulauf (2) und der Ablauf (3) jeweils verschliessbar sind.
